# FASCICULE DE BREVET EUROPEEN

(11) **EP 4 040 733 B1**
(45) Date de publication et mention de la délivrance du brevet: **17.07.2024**
(21) Numéro de dépôt: 21305175.8
(22) Date de dépôt: 09.02.2021
(51) Int. Cl.: H04L 67/125, H04L 67/51, H04L 67/562, H04L 41/5051

(54) **PARTAGE PERFORMANT DE RESSOURCES ENTRE DES OBJETS IOT CONNECTÉS FORMANT UN RÉSEAU LOCAL**
LEISTUNGSSTARKE GETEILTE NUTZUNG VON RESSOURCEN ZWISCHEN VERBUNDENEN IOT-OBJEKTEN, DIE EIN LOKALES NETZWERK BILDEN
EFFICIENT RESOURCE SHARING BETWEEN CONNECTED IOT OBJECTS FORMING A LOCAL NETWORK

(43) Date de publication de la demande: 10.08.2022
(73) Titulaire: Bull SAS, 78340 Les Clayes-sous-Bois (FR)
(72) Inventeur: DEMEILLIEZ, Bruno, 38380 SAINT LAURENT DU PONT (FR)
(74) Mandataire: IPAZ

(56) Documents cités:
- US-A1- 2020 067 800
- AL RAWAHI AHMED SALIM ET AL: "An Evaluation of Optimisation Approaches in Cloud of Things Resource Trading", 2018 IEEE 6TH INTERNATIONAL CONFERENCE ON FUTURE INTERNET OF THINGS AND CLOUD (FICLOUD), IEEE, 6 August 2018 (2018-08-06), pages 208 - 215, XP033399730, DOI: 10.1109/FICLOUD.2018.00038
- LI FAN ET AL: "A Trust Model for SLA Negotiation Candidates Selection in a Dynamic IoT Environment", IEEE TRANSACTIONS ON SERVICES COMPUTING, vol. 3070405, no. 1, 1 January 2021 (2021-01-01), XP055813137, Retrieved from the Internet <URL:https://ieeexplore.ieee.org/stampPDF/getPDF.jsp?tp=&arnumber=9395239&ref=aHR0cHM6Ly9pZWVleHBsb3JlLmllZWUub3JnL2RvY3VtZW50LzkzOTUyMzk=> DOI: 10.1109/TSC.2021.3070405

## Description

La présente invention concerne un procédé de partage performant de ressources entre des objets connectés formant un réseau local. Elle concerne également un système mettant en oeuvre un tel procédé.

Le domaine de l'invention est le domaine de l'Internet des Objets (IoT), et en particulier le domaine de la gestion des ressources et des fonctionnalités dans le domaine de l'IoT.

### État de la technique

L'Internet des objets, ou Internet Of Things (IoT), est défini comme étant le réseau local formé par une pluralité d'objets, appelés objets connectés, qui sont interconnectés entre eux sans passer par le réseau Internet.

L'IoT est un domaine en pleine expansion et ses domaines d'application sont de plus en plus variés : smart city, gestion intelligente d'une maison, monitoring d'installations, voitures autonomes, etc...

Les objets connectés peuvent communiquer au travers de sous-réseaux locaux, ces derniers pouvant être interconnectés entre eux grâce, par exemple, à l'Internet. Ainsi, les objets connectés peuvent communiquer entre eux dans le réseau local, et le réseau local peut communiquer avec d'autres réseaux locaux d'objets connectés, au travers d'Internet. Les objets connectés se trouvant au sein d'un réseau local peuvent être très variés et peuvent être prévus pour mettre en oeuvre des fonctions très différentes. Ainsi, les objets connectés au sein d'un réseau local peuvent par exemple comprendre des détecteurs de fumées, des appareils électroménagers, des serrures, des volets, des tablettes, etc. Chacun de ces objets est dédié à la réalisation d'au moins fonction pour laquelle il est conçu. Ces exemples ne sont, bien entendu, pas limitatifs.

Actuellement, chaque objet connecté est dimensionné en ressources matérielles et/ou logicielles en considérant cet objet de manière individuelle et indépendante des autres objets connectés, que ce soit en terme de ressources de calcul, de ressources de stockage, de capteurs, de ressources de communication, etc. Cette conception de l'objet connecté peut rendre ledit objet connecté onéreux et complexe, à concevoir et à fabriquer. AL RAWAHI AHMED SALIM ET AL: "An Evaluation of Optimisation Approaches in Cloud of Things Resource Trading", 2018 IEEE 6TH INTERNATIONAL CONFERENCE ON FUTURE INTERNET OF THINGS AND CLOUD (FICLOUD), IEEE, pages 208-215, XP033399730 décrit une architecture de gestion de ressources fondée sur une technologie de type *Cloud of Things.*

Un but de la présente invention est de remédier à cet inconvénient.

Un autre but de la présente invention est de proposer une solution de partage de ressources entre objets connectés permettant de diminuer le coût de fabrication et la complexité d'un objet connecté.

Un autre but de la présente invention est de proposer une solution de partage performant de ressources entre objets connectés.

### Exposé de l'invention

L'invention propose d'atteindre au moins un des buts précités par un procédé, mis en oeuvre par ordinateur, de partage de ressources entre des objets connectés formant un réseau local, ledit procédé mettant en oeuvre une unité de gestion connectée auxdits objets connectés au sein dudit réseau local et pilotant le partage de ressources à l'aide d'une liste de ressource(s) partagée(s), ledit procédé étant défini dans la revendication 1.

Ainsi, l'invention propose de mettre en oeuvre une unité de gestion pour piloter le partage de ressources, matérielles ou logicielles, au sein d'un réseau d'objets connectés au sein du réseau local. Cette unité de gestion permet de planifier et de gérer l'accès de chaque objet connecté aux ressources équipant d'autres objets connectés et qui sont mises en partage au sein dudit réseau local, ces ressources étant listées dans une liste de ressources partagées.

De plus, et surtout, le procédé selon l'invention propose de sélectionner l'objet connecté proposant la ressource la plus performant, lorsque la ressource demandée est disponible au sein de plusieurs objets connectés. Ainsi, dans le cas où plusieurs objets connectés peuvent partager une ressource avec un premier objet pour réaliser une opération cible pour le compte de ce premier objet, c'est le plus performant de ces objets connectés qui est sélectionné pour réaliser cette opération cible. De plus, pour chacun de ces objets, la performance prise en compte est la performance réelle de cet objet connecté sur des réalisations passées d'opérations similaires ou identiques à l'opération cible.

Ainsi, l'invention permet de réaliser un partage plus performant de ressource entre objets connectés. L'invention permet ainsi de mieux exploiter les ressources partagées au sein du réseau local et ajuster le partage de ressource de manière plus adaptée.

Il est à noter que, selon la présente invention, les ressources sont partagées au sein du réseau local formé par les objets connectés qui sont interconnectés entre eux, sans sortir dudit réseau local. Ainsi, le partage des ressources entre les objets connectés du réseau local ne nécessite pas de connexion à Internet mais uniquement une connexion à l'unité de gestion se trouvant au sein du réseau local. Autrement dit, le partage des ressources se fait localement.

L'unité de gestion permet de faire la liaison entre les objets connectés du réseau local pour l'utilisation partagée de ressources disponibles au sein dudit réseau local, au niveau de chaque objet connecté, de sorte que les ressources d'un objet connecté peuvent être utilisées pour les besoins d'un autre objet connecté.

Dans la présente invention, au moins une ressource qui équipe un objet connecté et qui peut être partagée par cet objet connecté avec d'autre objets connectés peut être une ressource matérielle ou une ressource logicielle, telle que par exemple :
- une ressource de calcul : par exemple un processeur ;
- une ressource de mémorisation, : par exemple une mémoire ;
- une ressource de communication : par exemple une interface de communication filaire ou non ;
- une ressource de mesure d'un paramètre : par exemple un capteur de température, un capteur de pression, etc. ;
- une ressource d'impression : par exemple une imprimante physique ;
- une ressource logicielle ou applicative : par exemple une application de cryptage, un logiciel de compression, une application de messagerie, etc.

Dans la suite, le terme « ressource » ou « ressource informatique » peut être utilisé pour désigner une ressource matérielle ou logicielle partagée au sein du réseau, sans perte de généralité.

De manière préférentielle, dans la présente invention, une ressource est dite « partagée » par un deuxième objet avec un premier objet, lorsqu'une opération de traitement de données, dite opération cible, est réalisée par ledit deuxième objet pour le compte dudit premier objet en utilisant cette ressource.

L'opération de traitement de données peut être réalisée immédiatement au moment où le premier objet émet une requête dans ce sens, lorsque la ressource pour réaliser cette opération de traitement de données est disponible immédiatement.

Alternativement, et de manière plus fréquente, l'opération de traitement de données est planifiée pour une réalisation ultérieure en fonction de la disponibilité de la ressource nécessaire à la réalisation de ladite opération. Dans ce cas, l'opération planifiée est mémorisée dans une liste d'opérations planifiées qui peut être la liste des ressources partagées, ou une autre liste.

Lorsqu'une opération de traitement de données est planifiée pour être réalisée par un deuxième objet connecté pour le compte d'un premier objet connecté, alors la disponibilité de la ressource impliquée au sein du deuxième objet connecté est modifiée dans la liste des ressources partagées.

La liste de ressource partagée liste toutes les ressources partagées au sein du réseau local par chaque objet connecté.

La liste de ressources partagées peut être individuelle à au moins un objet connecté.

Alternativement, ou en plus, la liste de ressources partagées peut être une liste commune à au moins deux, et en particulier, à tous les objets connectés formant le réseau local.

Suivant une caractéristique nullement limitative, la liste de ressources partagées peut comprendre, pour au moins une ressource partagée par un objet connecté, au moins une donnée relative à :
- une durée de disponibilité ;
- un horaire de disponibilité ;
- un taux de disponibilité ;
de ladite ressource.

Lorsqu'une ressource partagée par un deuxième objet connecté est mise à la disposition d'un premier objet connecté, immédiatement ou à un moment ultérieur, la disponibilité de cette ressource peut être modifiée dans la liste de ressources partagées.

Par exemple, la ressource partagée peut être supprimée de la liste, au moins pendant son utilisation pour le compte du premier objet connecté, ou pendant une durée pendant laquelle elle est attribuée audit premier objet connecté. Dans ce cas, la liste de ressources partagées ne mentionne que les ressources disponibles à un instant donné.

Alternativement, une donnée de disponibilité associée à ladite ressource dans la liste des ressources partagées peut être modifiée pour modifier l'un quelconque des paramètres listés ci-dessus, à savoir, la durée, l'horaire ou le taux de disponibilité. Dans ce cas, la liste de ressources partagées mentionne toutes les ressources partagées, en indiquant pour chaque ressource leur disponibilité à un instant donné.

La disponibilité d'une ressource équipant un objet connecté peut être déterminée de plusieurs façons.

Suivant première solution, un progiciel installé au sein dudit objet connecté peut fournir des informations concernant l'utilisation de chaque ressource informatique dudit objet connecté. Ces informations peuvent être utilisées pour déduire la disponibilité ou non de chaque ressource à un instant donné. A partir de ces informations, il est possible d'établir, pour chaque ressource, un planning de disponibilité pour partager ladite ressource avec les autres objets connectés faisant partie dudit réseau.

Suivant une autre solution, il est possible de déployer au sein de l'objet connecté une ou de sondes logicielles permettant de réaliser des mesures système à partir du système d'exploitation dudit objet connecté. Il existe un grand nombre d'applications logicielles de surveillance permettant de déployer ce type sonde, telles que par exemples les applications connues sous le nmon, perfmon, System Monitoring Lite, iKeyMonitor. L'utilisation de telle ou telle solution de monitoring peut dépendre du système d'exploitation de l'objet connecté. En fonction des mesures effectuées par ces sondes il est possible de déterminer le taux, ou le niveau, d'utilisation de telle ou telle ressources au sein dudit objet connecté et donc d'établir un planning de disponibilité de ladite ressource pour être partagée avec les autres objets connectés du réseau.

Le niveau d'utilisation d'une ressource peut être un indicateur simple ou complexe. Dans le cas d'un capteur, il s'agit d'un indicateur simple indiquant s'il est ou non interrogé. Dans le cas d'une ressource telle que le CPU, il s'agit d'un indicateur complexe indiquant à la fois son niveau d'utilisation, mais également son niveau d'attente (Wait) ou encore le nombre de processus en attente de traitement. Dans le cas d'une ressource telle que les I/O disque, il s'agit là encore d'un indicateur complexe (nombre d 'I/O en lecture, nombre d'I/O en écriture, Idle Time, Current Disk queue Length...).

Un planning disponibilité peut être un planning quotidien ou un planning hebdomadaire, etc.

Avantageusement, les objets connectés candidats peuvent être identifiés, par l'unité de gestion, par consultation de la liste de ressources partagées.

Par exemple, lorsque le premier objet connecté demande à bénéficier d'une ressource R1 pour réaliser l'opération OP1, éventuellement en indiquant une D1 à la date il souhaite bénéficier de cette ressource R1, et éventuellement en indiquant une durée T1 pendant laquelle il souhaite bénéficier de la ressource R1, alors l'unité de gestion consulte la liste de ressources partagées pour déterminer quels objets connectés proposent la ressource R1, à la date D1 et pendant une durée au moins égale T1 le cas échéant. Si aucun objet connecté ne propose la ressource R1 avec cette disponibilité alors le premier objet connecté ne peut bénéficier de la ressource d'un autre objet connecté pour réaliser l'opération OP1. Si un unique objet connecté propose la ressource R1 avec cette disponibilité alors cet objet connecté est sélectionné comme deuxième objet pour réaliser l'opération OP1 pour le compte du premier objet connecté. S'il existe plusieurs objets connectés qui proposent la ressource R1 avec cette disponibilité, alors chacun de ces objets est un objet candidat pour partager cette ressource R1 avec le premier objet connecté, à la date D1 pendant une durée T1 le cas échéant, pour réaliser l'opération OP1 pour le compte du premier objet connecté.

La requête d'utilisation émise par le premier objet peut comprendre une combinaison quelconque d'au moins une des données suivantes :
- au moins une donnée relative à la nature de la ressource : par exemple une imprimante ;
- au moins une donnée relative à la nature de l'opération cible : par exemple une impression d'un document de 10 pages ;
- au moins une donnée relative à une date de réalisation de ladite opération cible : par exemple à 18h00 ;
- au moins une donnée relative à une durée de réalisation de ladite opération cible : par exemple tous les jours de la semaine ;
- au moins une donnée relative à une fréquence d'itération de ladite opération cible : par exemple tous les jours de la semaine ;
- etc.

Pour au moins une opération cible, au moins un indicateur de performance comprend:
- une durée de réalisation : par exemple impression réalisée en 15 secondes ; ainsi que au moins un des indicateurs ci-dessous:
- une puissance électrique consommée : par exemple 220 Watt ;
- une puissance de calcul consommée ;
- une quantité de mémoire consommée ;
lors de la réalisation de ladite opération cible.

Au moins un, en particulier chaque, indicateur de performance peut être mémorisé dans au moins une liste d'indicateur(s) de performance, par exemple mémorisée dans l'unité de gestion, en association avec un objet connecté et une opération cible.

Lorsqu'un objet connecté a réalisé plusieurs fois une opération cible alors, pour au moins un indicateur de performance, la valeur mémorisée peut être la dernière valeur mesurée, ou une moyenne des valeurs mesurées pour plusieurs, voire toutes les, réalisations de l'opération cible par cet objet connecté.

Une liste d'indicateur(s) de performance peut être individuelle à au moins un, et en particulier à chaque objet connecté. Dans ce cas, cette liste indique pour chaque opération cible, ou type d'opérations cibles, la valeur du ou de chaque indicateur de performance de cet objet connecté, mesurée dans le passé.

Alternativement, une liste d'indicateur(s) de performance peut être commune à plusieurs, voire à tous les objets connectés.

La ou chaque liste d'indicateur(s) de performance peut être tenue et/ou mise à jour par l'unité de gestion en fonction de valeurs mesurées au niveau de chaque objet connecté et communiquées à ladite unité de gestion.

Le procédé selon l'invention peut comprendre
- une mesure d'une valeur d'au moins indicateur de performance lors de la réalisation de l'opération cible par le deuxième objet, et
- une mise à jour de la valeur dudit au moins un indicateur de performance associé audit deuxième objet.

Au moins un indicateur de performance d'un objet connecté pour la réalisation d'une opération cible peut être mesurée par une sonde équipant ledit objet connecté. Une telle sonde peut être déployée par l'unité de gestion, ou peut équiper l'objet connecté, en particulier de manière native.

Par exemple, les ressources de calcul consommées par un objet connecté pour réaliser une opération de traitement de données peuvent être mesurées par une sonde surveillance du CPU dudit objet connecté. Suivant un autre exemple, l'énergie consommée par une imprimante pour réaliser une impression d'une page peut être mesurée en déployant une sonde surveillant la consommation électrique de ladite imprimante.

Au moins une sonde déployée dans un objet connecté pour mesurer un indicateur de performance peut être une sonde déployée pour mesurer l'utilisation d'une ressource informatique dudit objet connecté en vue de déterminer la disponibilité de ladite ressource. Ainsi, une même sonde déployée dans l'objet connecté peut à la fois être utilisée pour déterminer une donnée de disponibilité d'une ressource et mesurer la valeur d'un indicateur de performance.

Le procédé selon l'invention peut comprendre, suite à l'étape de sélection, une attribution de l'opération cible au deuxième objet.

Cette attribution comprendre une mise à la disposition du premier objet de la ressource du deuxième objet immédiatement, pour un déclenchement immédiat de l'opération cible.

Alternativement, et de manière plus fréquente, cette attribution peut comprendre une planification, à une date future, d'une mise à la disposition du premier objet de la ressource du deuxième objet, pour une réalisation à une date ultérieure de l'opération cible.

L'opération cible planifiée peut être signalée au deuxième objet qui peut l'ajouter dans son agenda.

L'opération cible planifiée peut être mémorisée dans une liste, et en particulier dans la liste de ressources partagées.

Dans tous les cas, la liste de ressources partagées peut être mise à jour, telle que décrit plus haut.

Selon l'invention, au moins une opération cible comprend, ou consiste en :
- une exécution d'une fonction identifiée : par exemple une fonction de cryptage de données ;
- une exécution d'un programme ou d'un logiciel : par exemple un antivirus ;
- un stockage de données ;
- une communication de données vers un dispositif local ou distant, par exemple au travers d'une interface de communication filaire ou sans fil, et en particulier au travers d'un réseau de type Internet ;
- une mesure d'une grandeur physique, telle que par exemple la température, la pression, un taux de monoxyde de carbone, l'hygrométrie, etc.

Suivant un autre objet de la présente invention, il est proposé un système de partage de ressource entre objets connectés, tel que défini dans la revendication 8, ledit système comprenant :
- plusieurs objets connectés, interconnectés entre eux, et formant un réseau local, et
- une unité de gestion, connectée à chacun desdits objets connectés, au sein dudit réseau local ;
configurés pour mettre en oeuvre toutes les étapes du procédé selon l'invention.

En particulier, l'unité de gestion est configurée pour mettre en oeuvre les étapes du procédé selon l'invention.

Suivant un mode de réalisation, l'unité de gestion peut être installée dans, ou peut être formée par, un appareil dédié se trouvant au sein du réseau local. Dans ce cas, cet appareil n'est pas prévu pour réaliser une autre fonction ou une autre tâche, par opposition aux objets connectés se trouvant dans le réseau.

Alternativement, l'unité de gestion peut être installée dans un objet connecté se trouvant dans le réseau local, et prévu et conçu pour réaliser au moins une autre tâche, de manière similaire aux objets connectés se trouvant dans le réseau local.

Avantageusement, au moins un objet connecté peut comporter un module logiciel, dit module de planning client, pour déterminer au moins une donnée de disponibilité d'au moins une ressource dudit objet connecté et pouvant être partagée au sein du réseau local.

Un tel module de planning client peut être configuré pour surveiller la nature et/ou la quantité de ressources consommées au sein dudit objet connecté pour la réalisation des tâches pour lesquelles ledit objet connecté est prévu. Ainsi, il est possible de déterminer, pour chaque ressource, les périodes pendant lesquelles ladite ressource n'est pas utilisée, ou peu utilisée, par ledit objet connecté et est donc disponible pour réaliser des opérations pour le compte d'autres objets connectés.

Pour au moins un objet connecté, un tel module de planning client peut être natif.

Pour au moins un objet connecté, un tel module de planning client peut être déployé dans ledit objet connecté ultérieurement, par exemple par l'unité de gestion.

En particulier, le système selon l'invention peut comprendre :
- au sein de chaque objet connecté, un module de planning client, pour déterminer la disponibilité dudit objet connecté, et en particulier la disponibilité des ressources équipant ledit objet connecté, et
- au sein de l'unité de gestion, un module de planning central, en communication avec chacun desdits modules de planning client ;
de sorte à déterminer et mettre à jour la liste ressources partagées.

Le système selon l'invention peut en outre comprend au moins un moyen pour mesurer la valeur d'un indicateur de performance d'un objet connecté pour réaliser une opération cible, ou un type d'opération cible.

Avantageusement, au moins un objet connecté peut comporter un module logiciel, dit module de mesure client, pour mesurer la valeur d'au moins un indicateur de performance dudit objet connecté lorsqu'il réalise une opération cible ou un type d'opération cible.

Un tel module de mesure client peut être configuré pour mesurer :
- la quantité de ressource de calcul consommée par l'objet connecté pour réaliser l'opération type ;
- la quantité de ressource de mémoire consommée par l'objet connecté pour réaliser l'opération type ;
- la puissance électrique consommée par l'objet connecté pour réaliser l'opération type ;
- la durée mise par l'objet connecté pour réaliser l'opération type ;
- etc.

Pour au moins un objet connecté, un tel module de mesure client peut être natif.

Pour au moins un objet connecté, un tel module de mesure client peut être déployé dans ledit objet connecté, par exemple par l'unité de gestion.

En particulier, le système selon l'invention peut comprendre :
- au sein de chaque objet connecté, un module de mesure client, pour mesurer le ou les indicateurs de performance ; et
- au sein de l'unité de gestion, un module logiciel, dit module de mesure central, en communication avec chacun desdits modules clients pour recevoir les valeurs mesurées par les modules de mesure client et mettre à jour la valeur d'au moins un indicateur de performance.

Avantageusement, pour au moins un objet connecté au moins un module de planning client est en partie ou en totalité est un module de mesure client, et *vice versa.*

Un objet connecté au sens de la présente invention peut être tout objet connecté.

Par exemple les objets connectés peuvent être des objets connectés présents dans une habitation tel qu'une alarme, une centrale de contrôle de volets roulant, un appareil électroménager, formant un réseau local au sein de ladite habitation.

Suivant un autre exemple, les objets connectés peuvent être des objets connectés présents dans un lieu professionnel, dans un lieu public, etc.

### Description des figures et modes de réalisation

D'autres avantages et caractéristiques apparaîtront à l'examen de la description détaillée d'un mode de réalisation nullement limitatif, et des dessins annexés sur lesquels :
- la FIGURE 1 est une représentation schématique d'un exemple de réalisation non limitatif d'un procédé selon l'invention ;
- la FIGURE 2 est une représentation schématique d'un autre exemple de réalisation non limitatif d'un procédé selon l'invention ;
- la FIGURE 3 est une représentation schématique d'un exemple de réalisation non limitatif d'un système selon l'invention ; et
- la FIGURE 4 est une représentation schématique d'un autre exemple de réalisation non limitatif d'un système selon l'invention.

Il est bien entendu que les modes de réalisation qui seront décrits dans la suite ne sont nullement limitatifs et la portée de l'invention est définie par les revendications. On pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à de l'état de la technique antérieur et si cette sélection est couverte par l' étendue des revendications. Cette sélection comprend au moins une caractéristique de préférence fonctionnelle sans détails structurels, ou avec seulement une partie des détails structurels si cette partie est uniquement suffisante pour conférer un avantage technique ou pour différencier l'invention par rapport à l'état de la technique antérieure et si cette partie est couverte par l' étendue des revendications.

Sur les figures les éléments communs à plusieurs figures conservent la même référence.

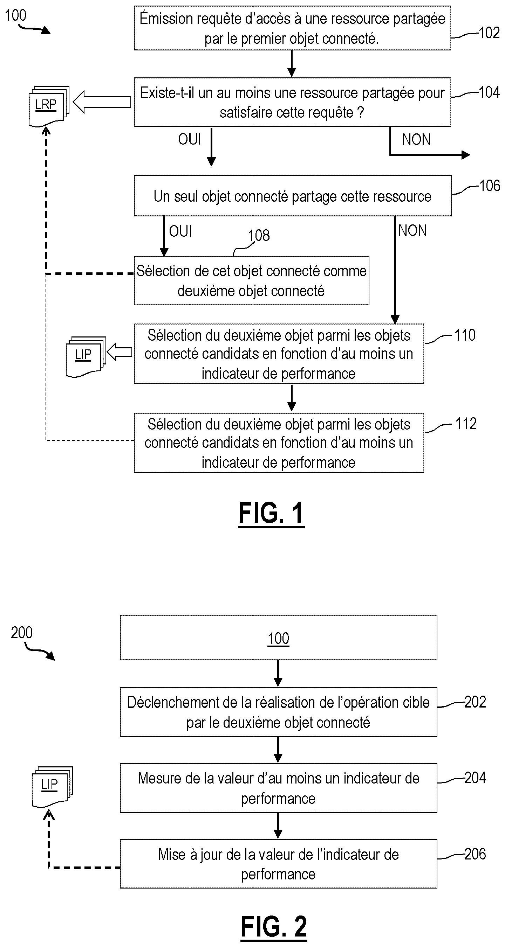

La FIGURE 1 est une représentation schématique d'un exemple de réalisation non limitatif d'un procédé selon l'invention.

Le procédé 100, représenté sur la FIGURE 1, peut être utilisé pour mutualiser les ressources dans un réseau local comprenant au moins deux objets connectés et une unité de gestion connectée à chacun desdits objets connectés.

Le procédé 100 comprend une étape 102 lors de laquelle un objet connecté, dit premier objet connecté, sans perte de généralités, émet une requête d'accès à une ressource qui pourrait être partagée par un autre objet connecté au sein du réseau local, pour réaliser une opération cible. En particulier, la requête prévoit de confier la réalisation d'un opération cible OP1 nécessitant une ressource R1 à un autre objet connecté au sein du réseau local qui dispose de ladite ressource R1.

Cette requête d'accès est envoyée à l'unité de gestion au sein du réseau local.

La requête d'accès peut comprendre différentes données. Suivant un exemple de réalisation nullement limitatif, la requête d'accès comprend les données suivantes :
- la nature de la ressource : par exemple un logiciel de cryptage de données ;
- la nature de l'opération cible à réaliser : par exemple un cryptage d'un fichier de données ;
- une date de réalisation de ladite opération : par exemple immédiatement ou à la date D1 ;
- une durée pour la réalisation de l'opération cible, par exemple T1=2minutes ;
- une fréquence de réalisation de ladite opération cible : par exemple fréquence hebdomadaire.

Lors d'une étape 104 l'unité de de gestion détermine si le réseau local comprend un ou plusieurs objets connectés proposant en partage la ressource demandée, à savoir le logiciel de cryptage de données. Pour cela, l'unité de gestion consulte une liste, notée LRP, listant chaque ressource partagée au sein du réseau, l'objet connecté ayant mis cette ressource en partage, et éventuellement (mais préférentiellement) un planning de partage de la ressource, ledit planning pouvant comprendre les instants de disponibilité de la ressource, une durée de disponibilité de la ressource, un taux de disponibilité de la ressource, etc.

Lorsqu'il n'existe aucun objet connecté qui partage la ressource demandée par le premier objet conformément à la requête émise par ledit premier objet, alors il est mis fin au procédé 100.

Lorsqu'à l'étape 106, il existe un unique objet connecté qui partage la ressource demandée par le premier objet conformément à la requête émise par le premier objet, alors cet objet est choisi par l'unité de gestion comme deuxième objet lors d'une étape 108. Lors de cette étape 108, la liste de ressources partagées LRP peut être est mise à jour, par l'unité de gestion, pour modifier la disponibilité de la ressource partagée par le deuxième objet.

Lorsqu'à l'étape 106, il existe plusieurs objets connectés qui partagent chacun la ressource demandée par le premier objet conformément à la requête émise par le premier objet, alors chacun de ces objets connectés est considéré comme objet connecté candidat pour partager sa ressource avec le premier objet. Lors d'une étape 110, l'unité de gestion consulte un fichier, référencée LIP, dans lequel est mémorisée la valeur de chaque indicateur de performance de chaque objet connecté candidat pour la réalisation de l'opération cible. Les valeurs de chaque indicateur de performance relatif à l'opération cible sont comparées lors de l'étape 110, pour identifier l'objet connecté candidat présentant le meilleur indicateur de performance.

Puis, lors d'une étape 112, l'objet connecté candidat présentant le(s) meilleur(s) indicateur(s) de performance est choisi comme deuxième objet connecté. Lors de cette étape 112, la liste de ressources partagée LRP est mise à jour, par l'unité de gestion, pour modifier la disponibilité de la ressource partagée par ledit deuxième objet.

La mise à jour de la liste LRP peut être réalisée de différentes manières pour modifier la disponibilité d'une ressource proposée au partage par un deuxième objet connecté lorsque ladite ressource a été effectivement partagée avec le premier objet connecté, immédiatement ou à une date future.

Par exemple, la ressource partagée peut être supprimée de la liste, au moins pendant son utilisation pour le compte du premier objet connecté, ou pendant une durée pendant laquelle elle est attribuée audit premier objet connecté. Dans ce cas, la liste de ressources partagées ne mentionne que les ressources disponibles à un instant donné, pour chaque instant.

Alternativement, il est possible de modifier une donnée de disponibilité mémorisée en association avec ladite ressource dans ladite liste LRP pour modifier sa disponibilité, et en particulier au moins un des paramètres suivants : sa durée de disponibilité, ses horaires de disponibilité ou son taux de disponibilité.

Suivant un mode de réalisation avantageux, la disponibilité d'une ressource équipant un objet connecté peut être déterminée par une sonde logiciel, équipant ledit objet connecté ou déployé dans ledit objet connecté par l'unité de gestion, pour mesurer et fournir des données concernant l'utilisation de ladite ressource au sein dudit objet connecté. Ces données peuvent être utilisées pour déduire la disponibilité ou non de ladite ressource à un instant donné, et en particulier sa durée et/ou son taux de disponibilité. Ainsi, il est possible d'établir, pour ladite ressource, un planning de disponibilité pour partager ladite ressource avec les autres objets connectés faisant partie dudit réseau. Ce planning peut être mémorisé dans le liste LRP.

Un planning disponibilité peut être un planning quotidien ou un planning hebdomadaire, etc.

De plus, un indicateur de performance d'un objet connecté pour la réalisation d'une opération cible peut être mesurée lors d'au moins une réalisation passée, par ledit objet connecté, de ladite opération cible ou d'une opération de même type. La valeur mémorisée dans le fichier LIP peut être la dernière valeur mesurée pour l'indicateur de performance, ou une moyenne de plusieurs valeurs mesurées.

La valeur d'un indicateur de performance peut être mesurée par une sonde logicielle, équipant l'objet connecté, ou déployée dans l'objet connecté par l'unité de gestion. Cette sonde peut être une sonde déjà utilisée dans l'objet connecté pour mesurer des données d'utilisation d'une ressource. Alternativement, cette sonde peut être une sonde dédiée, prévue pour mesurer l'indicateur de performance. Par exemple, l'objet connecté peut être munie d'une sonde mesurant :
- la consommation électrique de l'objet connecté lors de la réalisation de l'opération cible, lorsque l'indicateur de performance est l'énergie consommée ;
- le taux d'utilisation du CPU lorsque l'indicateur de performance est le taux d'utilisation d'un CPU ;
- la durée de réalisation d'une opération cible lorsque l'indicateur de performance est la durée que met l'objet connecté pour réaliser l'opération cible.

La FIGURE 2 est une représentation schématique d'un autre exemple de réalisation non limitatif d'un procédé selon l'invention.

Le procédé 200, représenté sur la FIGURE 2, peut être utilisé pour mutualiser les ressources dans un réseau local comprenant au moins deux objets connectés.

Le procédé 200 comprend toutes les étapes du procédé 100 de la FIGURE 1.

Le procédé 200 comprend en outre une étape 202 déclenchant la réalisation de l'opération cible par le deuxième objet pour le compte du premier objet connecté. Cette étape 202 peut être mise en oeuvre immédiatement après l'étape 108, ou de l'étape 112, dans le cas d'un partage immédiat de ressource. Alternativement, l'étape 202 peut être mise en oeuvre à une date future après la mise en oeuvre des étapes du procédé 100, dans le cas d'un partage futur planifié à une date future.

Pendant la réalisation de l'opération cible, une étape 204 réalise la mesure d'au moins une valeur d'au moins un indicateur de performance, telle qu'une quantité de ressource de calcul utilisée pour réaliser l'opération cible, une puissance électrique consommée pour réaliser l'opération cible, une durée de réalisation de l'opération cible, par des sondes logicielles et/ou sondes matérielles appropriées équipant le deuxième objet connecté, ou déployée dans le deuxième objet par l'unité de gestion.

Lorsque l'opération cible a été réalisée, les résultats de cette opération cible sont communiqués par le deuxième objet connecté au premier objet connecté, directement ou par l'intermédiaire de l'unité de gestion.

Lors d'une étape 206, préférentiellement réalisée lorsque l'opération cible est terminée, la valeur de chaque indicateur de performance du deuxième objet connecté est mise à jour dans le fichier LIP en fonction de la ou des mesures réalisées lors de l'étape 204, pour cette opération cible. Cette mise à jour peut être réalisée directement par le deuxième objet connecté, ou préférentiellement, par l'unité de gestion.

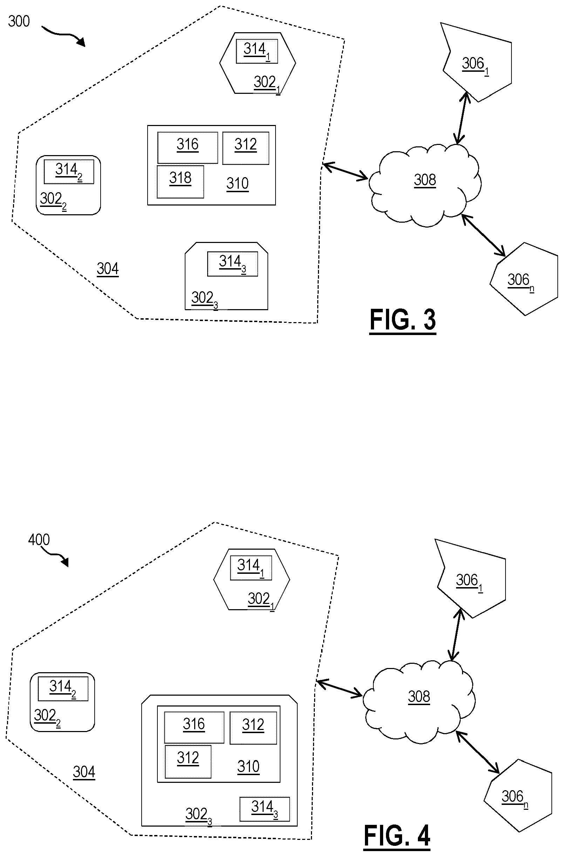

La FIGURE 3 est une représentation schématique d'un exemple de réalisation non limitatif d'un système selon l'invention.

Le système 300, représenté sur la FIGURE 3, peut être utilisé pour la mise en oeuvre d'un procédé de partage de ressources au sein d'un réseau local d'objets connectés, en particulier le procédé 100 de la FIGURE 1 ou le procédé 200 de la FIGURE 2.

Dans l'exemple représenté, le système 300 comprend au total trois objets connectés 302₁, 302₂, 302₃, également désignés par la référence 302ᵢ ou 302 dans la suite. Bien entendu, le nombre d'objets connectés n'est pas limité à 3 et peut être supérieur ou égal à 2.

Les objets connectés 302 forment un réseau local 304 et sont interconnectés entre eux. Autrement dit, chaque objet connecté 302ᵢ est en communication avec chacun des autres objets connectés 302ᵢ.

Chaque objet connecté 302ᵢ réalise une ou plusieurs tâches pour lesquelles il est conçu. Dans l'exemple décrit, et de manière nullement limitative, les objets connectés 302ᵢ peuvent être des objets connectés se trouvant au sein d'une habitation, tel qu'une alarme, un appareil électroménager, etc. formant un réseau local 304 au sein de ladite habitation.

Le réseau local 304 peut être connecté à un ou plusieurs autres réseaux 306₁-306ₙ, locaux ou non, par exemple au travers d'un réseau de communication 308 tel que Internet.

Le système 300 selon l'invention comprend en outre une unité de gestion 310, en communication avec chacun des objets connectés 302₁-302₃. Cette unité de gestion 310 est configurée pour mettre en oeuvre toutes les étapes du procédé selon l'invention, et en particulier du procédé 100 de la FIGURE 1 ou du procédé 200 de la FIGURE 2.

Suivant un mode de réalisation non limitatif, l'unité de gestion 310 peut être configurée pour :
- recevoir, de la part du premier objet connecté, une requête d'accès à une ressource partagée par un autre connecté pour réaliser une opération cible ;
- identifier le deuxième objet, pour lui confier la réalisation, immédiate ou ultérieure, de l'opération.

L'unité de gestion 310 peut en outre être configurée pour établir un planning de disponibilité d'au moins une ressource, logicielle ou matérielle, d'un ou plusieurs objets connecté 302ᵢ pour être partagée avec au moins un autre objet connecté 302ᵢ du réseau local 304, c'est-à-dire pour réaliser des opérations pour le compte d'un autre objet connecté 302ᵢ au sein dudit réseau local 304. Pour ce faire, l'unité de gestion 310 peut comprendre un module de planning central 312, en particulier logiciel, et déployer dans chaque objet connecté 302₁-302₃ un module logiciel de planning client, respectivement 314₁-314₃. Chaque module de planning client 314ᵢ équipant un objet connecté 302ᵢ a pour fonction de surveiller l'utilisation des ressources dont est dotées ledit objet connecté 302ᵢ et renseigner le module de planning central 312 de sorte que ledit module central de planning 312 peut établir un planning de disponibilité de chaque ressource au sein de chaque objet connecté 302ᵢ.

Suivant une alternative, pour au moins un objet connecté 302ᵢ, le module de planning client 314ᵢ peut être un module natif présent dans ledit objet connecté 302ᵢ de sorte qu'il n'est pas déployé par l'unité de gestion.

L'unité de gestion 310 peut en outre être configurée pour mettre en oeuvre un mécanisme de mesure d'indicateurs de performance et de mise à jour du fichier LIP. Pour chaque objet connecté 302ᵢ, ce mécanisme de mesure d'indicateurs de performance peut utiliser un module de mesure client dédié, ou utiliser le module client 314ᵢ déployé dans ledit objet connecté 302ᵢ et mesurer au moins un indicateur de performance lorsque ledit objet connecté 302ᵢ réalise une opération cible, ou un type d'opération cibles. L'indicateur de performance peut être l'un quelconque des indicateurs de performance décrits plus haut. L'unité de gestion 310 peut comprendre un module 318, dit module de mesure central, pour piloter la mesure d'indicateurs de performance et mettre à jour la valeur de chaque indicateur de performance. Ce module de mesure central 318 peut demander à chaque module de planning client 314ᵢ de mesurer la valeur d'au moins un indicateur de performance, recevoir la valeur mesurée et mettre à jour le fichier LIP.

Dans l'exemple représenté, chaque module de planning client 314ᵢ utilisé pour déterminer la disponibilité des ressources d'un objet connecté 302ᵢ est utilisé comme module de mesure client pour mesurer la valeur d'au moins un indicateur de performance de cet objet connecté. Alternativement, il est possible d'utiliser un module de mesure client indépendant du module de planning client.

L'unité de gestion 310 peut en outre comprendre :
- des moyens de mémorisation (non représentés), par exemple pour mémoriser le la liste LRP et/ou le fichier LIP ;
- une interface de communication (non représentée), filaire ou sans, avec chaque objet connecté 302ᵢ ; et
- éventuellement, une interface de communication (non représentée), filaire ou sans fil, avec un autre réseau, tel que le réseau Internet 308,
- etc.

Dans l'exemple représenté sur la FIGURE 3, l'unité de gestion 310 est intégrée dans un appareil dédié, indépendant des objets connectés, et ne réalisant aucune autre tâche.

La FIGURE 4 est une représentation schématique d'un autre exemple de réalisation non limitatif d'un système de mutualisation de ressources entre des objets connectés formant un réseau local.

Le système 400, représenté sur la FIGURE 4, peut être utilisé pour la mise en oeuvre d'un procédé partage de ressources au sein d'un réseau local d'objets connectés, en particulier le procédé 100 de la FIGURE 1 ou le procédé 200 de la FIGURE 2.

Le système 400 comprend tous les éléments du système 300 de la FIGURE 3, sauf en ce qui concerne les différences indiquées ci-dessous.

Dans le système 400 de la FIGURE 4, l'unité de gestion 310 est intégrée dans l'objet connecté 302₃.

Suivant encore une autre alternative, l'unité de gestion peut être intégrée dans un autre appareil tel que par exemple un point d'accès à Internet, un switch, etc.

De manière générale, l'invention n'est pas limitée aux exemples détaillés ci-dessus en référence aux FIGURES et la portée de la présente invention est donnée par les revendications.

## Revendications

1. Procédé (100;200), mis en oeuvre par ordinateur, de partage de ressources entre des objets connectés (302₁-302₃) formant un réseau local (304), ledit procédé (100;200) mettant en oeuvre une unité de gestion (310) connectée auxdits objets connectés (302₁-302₃) au sein dudit réseau local (304) et pilotant le partage de ressources à l'aide d'une liste de ressource(s) partagée(s) (LRP), ledit procédé (100;200) comprenant au moins une itération des étapes suivantes :
- émission (102), par un premier objet connecté (302ᵢ) vers ladite unité de gestion (304), d'une requête d'utilisation d'une ressource d'un autre objet connecté (302ᵢ) pour la réalisation d'une opération cible ; et
- sélection (112), par ladite unité de gestion (304), d'un deuxième objet connecté (302ᵢ) possédant ladite ressource pour réaliser ladite opération cible pour le compte dudit premier objet (302ᵢ) ;
lorsque plusieurs objets connectés (302ᵢ), dits objets candidats, peuvent réaliser ladite opération cible, le deuxième objet (302ᵢ) est sélectionné parmi lesdits objets candidats en fonction d'au moins un indicateur de performance, préalablement mesuré pour chacun desdits objets candidats, lors de réalisation(s) passée(s) d'opération(s) identique(s) ou similaire(s) à ladite opération cible ;
**caractérisé en ce que** la requête comprend au moins une donnée relative à une durée de réalisation de ladite opération cible et au moins un indicateur de performance est, ou comprend, une durée de réalisation préalablement mesurée pour chacun desdits objets candidats lors de réalisation(s) passée(s) d'opération(s) identique(s) ou similaire(s) à ladite opération cible et **en ce que** le deuxième objet sélectionné est identifié comme étant le candidat présentant le meilleur indicateur de performance à partir de la comparaison de chaque indicateur de performance relatif à l'opération cible.

2. Procédé (100;200) selon la revendication précédente, **caractérisé en ce que** les objets connectés candidats sont identifiés, par l'unité de gestion (304), par consultation de la liste de ressources partagées (LRP).

3. Procédé (100;200) selon l'une quelconque des revendications précédentes, **caractérisé en ce que** la requête comprend en outre une combinaison quelconque d'au moins une des données suivantes :
- au moins une donnée relative à la nature de la ressource,
- au moins une donnée relative à la nature de l'opération cible,
- au moins une donnée relative à une date de réalisation de ladite opération cible,
- au moins une donnée relative à une fréquence d'itération de ladite opération cible,
- etc.

4. Procédé (100;200) selon l'une quelconque des revendications précédentes, **caractérisé en ce que**, pour au moins une opération cible, au moins un indicateur de réalisation est, ou comprend, en outre :
- une puissance électrique consommée ;
- une puissance de calcul consommée ;
- une quantité de mémoire consommée ;
lors de la réalisation de ladite opération cible.

5. Procédé (200) selon l'une quelconque des revendications précédentes, **caractérisé en ce qu'**il comprend :
- une mesure (204) d'une valeur d'au moins indicateur de performance lors de la réalisation de ladite opération cible par le deuxième objet, et
- une mise à jour (206) de la valeur dudit au moins un indicateur de performance associé audit deuxième objet.

6. Procédé (100;200) selon l'une quelconque des revendications précédentes, **caractérisé en ce qu'**il comprend, suite à l'étape de sélection (112), une attribution de l'opération cible au deuxième objet.

7. Procédé (100;200) selon l'une quelconque des revendications précédentes, **caractérisé en ce qu'**au moins une opération cible comprend, ou consiste en :
- une exécution d'une fonction identifiée ;
- une exécution d'un programme ou d'un logiciel ;
- un stockage de données ;
- une communication de données vers un dispositif local ou distant ;
- une mesure d'une grandeur physique.

8. Système (300;400) de partage de ressources entre objets connectés comprenant :
- plusieurs objets connectés (302₁-302₃), interconnectés entre eux, formant un réseau local (304), et
- une unité de gestion (310), connectée à chacun desdits objets connectés (302₁-302₃) au sein dudit réseau local (304) ;
configurés pour mettre en oeuvre toutes les étapes du procédé (100;200) de partage de ressources selon l'une quelconque des revendications précédentes.

9. Système (300;400) selon la revendication précédente, **caractérisé en ce que** l'unité de gestion est installée, ou est formée par :
- un appareil dédié se trouvant au sein du réseau local (304), ou
- un objet connecté (302₃) se trouvant dans le réseau local (304) et réalisant au moins une autre tâche.

10. Système (300;400) selon l'une quelconque des revendications 8 ou 9, **caractérisé en ce qu'**au moins un objet connecté comporte un module logiciel (314ᵢ) pour déterminer au moins une donnée de disponibilité d'au moins une ressource au sein dudit objet connecté.

11. Système (300;400) selon l'une quelconque des revendications 8 à 10, caractérisé en qu'au moins un objet connecté comprend un module logiciel, dit module de mesure client, pour mesurer la valeur d'au moins un indicateur de performance dudit objet connecté lorsqu'il réalise une opération cible ou un type d'opération cible.

## Patentansprüche

1. Computerimplementiertes Verfahren (100; 200) zum gemeinsamen Nutzen von Ressourcen durch verbundene Objekte (302₁-302₃), die ein lokales Netzwerk (304) bilden, wobei das Verfahren (100; 200) eine mit den innerhalb des lokalen Netzwerks (304) verbundenen Objekten (302₁-302₃) verbundene Verwaltungseinheit (310) implementiert und das gemeinsame Nutzen von Ressourcen unter Verwendung einer Liste gemeinsam genutzter Ressourcen (LRP) steuert, wobei das Verfahren (100; 200) mindestens eine Iteration der folgenden Schritte umfasst:
- Senden (102), durch ein erstes verbundenes Objekt (302ᵢ) an die Verwaltungseinheit (304), einer Anforderung zum Nutzen einer Ressource eines anderen verbundenen Objekts (302ᵢ) zur Ausführung einer Zieloperation; und
- Auswählen (112), durch die Verwaltungseinheit (304), eines zweiten verbundenen Objekts (302ᵢ), das über die Ressource verfügt, um die Zieloperation für das erste Objekt (302ᵢ) auszuführen;
wenn mehrere als Kandidatenobjekte bezeichnete verbundene Objekte (302ᵢ) die Zieloperation ausführen können, wird das zweite Objekt (302ᵢ) aus den Kandidatenobjekten in Abhängigkeit von mindestens einem Leistungsindikator ausgewählt, der zuvor für jedes der Kandidatenobjekte während der früheren Ausführung einer oder mehrerer Operationen, die mit der Zieloperation identisch oder dieser ähnlich sind, gemessen wurde;
**dadurch gekennzeichnet, dass** die Anforderung mindestens eine mit der Ausführungsdauer der Zieloperation in Zusammenhang stehende Angabe umfasst und dass mindestens ein Leistungsindikator eine Ausführungsdauer ist oder umfasst, die zuvor für jedes der Kandidatenobjekte während der früheren Ausführung einer oder mehrerer Operationen, die mit der Zieloperation identisch oder dieser ähnlich sind, gemessen wurde, und dadurch, dass es sich bei dem zweiten ausgewählten Objekt um den Kandidaten handelt, der beim Vergleich der jeweiligen Leistungsindikatoren in Bezug auf die Zieloperation den besten Leistungsindikator aufweist.

2. Verfahren (100; 200) nach dem vorstehenden Anspruch,
**dadurch gekennzeichnet, dass** die verbundenen Kandidatenobjekte von der Verwaltungseinheit (304) durch Durchsuchen der Liste der gemeinsam genutzten Ressourcen (LRP) identifiziert werden.

3. Verfahren (100;200) nach einem der vorstehenden Ansprüche, **dadurch gekennzeichnet, dass** die Anforderung ferner eine beliebige Kombination aus mindestens einer der folgenden Angaben umfasst:
- mindestens eine Angabe, die sich auf die Art der Ressource bezieht,
- mindestens eine Angabe, die sich auf die Art der Zieloperation bezieht,
- mindestens eine Angabe, die sich auf ein Ausführungsdatum der Zieloperation bezieht,
- mindestens eine Angabe, die sich auf eine Wiederholungshäufigkeit der Zieloperation bezieht,
- usw.

4. Verfahren (100; 200) nach einem der vorstehenden Ansprüche, **dadurch gekennzeichnet, dass** für mindestens eine Zieloperation mindestens ein Ausführungsindikator ferner Folgendes ist oder umfasst:
- eine verbrauchte elektrische Leistung;
- eine verbrauchte Rechenleistung;
- eine Menge an verbrauchtem Speicher;
während der Ausführung der Zieloperation.

5. Verfahren (200) nach einem der vorstehenden Ansprüche,
**dadurch gekennzeichnet, dass** es Folgendes umfasst:
- Messen (204) eines Wertes mindestens eines Leistungsindikators während der Ausführung der Zieloperation durch das zweite Objekt, und
- Aktualisieren (206) des Wertes des mindestens einen dem zweiten Objekt zugeordneten Leistungsindikators.

6. Verfahren (100;200) nach einem der vorstehenden Ansprüche,
**dadurch gekennzeichnet, dass** es auf den Schritt des Auswählens (112) folgend ein Zuteilen der Zieloperation an das zweite Objekt umfasst.

7. Verfahren (100;200) nach einem der vorstehenden Ansprüche,
**dadurch gekennzeichnet, dass** mindestens eine Zieloperation Folgendes umfasst oder aus Folgendem besteht:
- Ausführen einer identifizierten Funktion;
- Ausführen eines Programms oder einer Software;
- Speichern von Daten;
- Übertragen von Daten an eine lokale oder entfernte Vorrichtung;
- Messen einer physischen Größe.

8. System (300; 400) zum gemeinsamen Nutzen von Ressourcen durch verbundene Objekte, umfassend:
- mehrere verbundene Objekte (302₁-302₃), die untereinander verbunden sind und ein lokales Netzwerk (304) bilden, und
- eine Verwaltungseinheit (310), die mit jedem dieser innerhalb des lokalen Netzwerks (304) verbundenen Objekte (302₁-302₃) verbunden ist;
die konfiguriert sind, um die Verfahrensschritte (100; 200) zum gemeinsamen Nutzen von Ressourcen nach einem der vorstehenden Ansprüche auszuführen.

9. System (300; 400) nach dem vorstehenden Anspruch,
**dadurch gekennzeichnet, dass** die Verwaltungseinheit durch Folgendes installiert oder gebildet wird:
- eine dedizierte Vorrichtung, die sich im lokalen Netzwerk (304) befindet, oder
- ein verbundenes Objekt (302s), das sich im lokalen Netzwerk (304) befindet und mindestens eine weitere Aufgabe ausführt.

10. System (300; 400) nach einem der Ansprüche 8 oder 9,
**dadurch gekennzeichnet, dass** mindestens ein verbundenes Objekt ein Softwaremodul (314ᵢ) zum Bestimmen mindestens einer Angabe über die Verfügbarkeit mindestens einer Ressource innerhalb des verbundenen Objekts umfasst.

11. System (300; 400) nach einem der Ansprüche 8 bis 10,
**dadurch gekennzeichnet, dass** mindestens ein verbundenes Objekt ein als Client-Messmodul bezeichnetes Softwaremodul zum Messen des Wertes mindestens eines Leistungsindikators des verbundenen Objekts, während es eine Zieloperation oder eine Art von Zieloperation ausführt, umfasst.

## Claims

1. A computer-implemented method (100;200) for sharing resources between connected objects (302₁-302₃) forming a local network (304), said method (100;200) implementing a management unit (310) connected to said connected objects (302₁-302s) within said local network (304) and controlling the sharing of resources using a list of shared resource(s) (LRP), said method (100;200) comprising at least one iteration of the following steps:
- transmission (102), by a first connected object (302ᵢ) to said management unit (304), of a request to use a resource of another connected object (302ᵢ) to perform a target operation; and
- selection (112), by said management unit (304), of a second connected object (302ᵢ) possessing said resource to perform said target operation on behalf of said first object (302ᵢ);
when a plurality of connected objects (302ᵢ), referred to as candidate objects, can perform said target operation, the second object (302ᵢ) is selected from said candidate objects as a function of at least one performance indicator, previously measured for each of said candidate objects, during past performance(s) of operation(s) identical or similar to said target operation;
**characterized in that** the request comprises at least one item of data relating to a performance time for the said target operation and at least one performance indicator is, or comprises, a previously measured performance time for each of the said candidate objects during past performance(s) of operation(s) identical or similar to the said target operation and **in that** the second object selected is identified as being the candidate with the best performance indicator on the basis of comparing each performance indicator relating to the target operation.

2. The method (100;200) according to the preceding claim, **characterized in that** the candidate connected objects are identified, by the management unit (304), by consulting the list of shared resources (LRP).

3. The method (100;200) according to any one of the preceding claims, **characterized in that** the request further comprises any combination of at least one of the following items of data:
- at least one item of data relating to the nature of the resource,
- at least one item of data relating to the nature of the target operation,
- at least one item of data relating to the date on which the target operation was performed,
- at least one item of data relating to an iteration frequency of said target operation,
- etc.

4. The method (100;200) according to any of the preceding claims, **characterized in that,** for at least one target operation, at least one performance indicator furthermore is, or comprises:
- electrical power consumed;
- computing power consumed;
- amount of memory consumed;
when the target operation is carried out.

5. The method (200) according to any one of the preceding claims, **characterized in that** it comprises:
- a measurement (204) of a value of at least one performance indicator when the second object performs said target operation, and
- an updating (206) of the value of said at least one performance indicator associated with said second object.

6. The method (100;200) according to any of the preceding claims, **characterized in that** it comprises, following the selection step (112), an assignment of the target operation to the second object.

7. The method (100;200) according to any of the preceding claims, **characterized in that** at least one target operation comprises, or consists of:
- executing an identified function;
- executing a program or software;
- storing data;
- comunicating data to a local or remote device;
- measuring a physical quantity.

8. A system (300;400) for sharing resources between connected objects comprising:
- a plurality of connected objects (302₁-302₃), interconnected with each other, forming a local network (304), and
- a management unit (310), connected to each of said connected objects (302₁-302₃) within said local area network (304);
configured to implement all the steps of the resource-sharing method (100;200) according to any one of the preceding claims.

9. The system (300;400) according to the preceding claim, **characterized in that** the management unit is installed, or is formed by:
- a dedicated device on the local network (304), or
- a connected object (302₃) in the local network (304) performing at least one other task.

10. The system (300;400) according to any one of claims 8 or 9, **characterized in that** at least one connected object comprises a software module (314ᵢ) for determining at least one item of availability data of at least one resource within said connected object.

11. The system (300;400) according to any one of claims 8 to 10, **characterized in that** at least one connected object comprises a software module, called a client measurement module, for measuring the value of at least one performance indicator of said connected object when it is performing a target operation or a type of target operation.
